# EUROPEAN PATENT SPECIFICATION

(11) **EP 4 037 014 B1**
(45) Date of publication and mention of the grant of the patent: **25.06.2025**
(21) Application number: 20868974.5
(22) Date of filing: 21.07.2020
(51) Int. Cl.: H01M 4/133, H01M 4/134, H01M 4/36, H01M 4/40, H01M 4/587, H01M 4/62, H01M 4/02

(54) **NEGATIVE ELECTRODE FOR LITHIUM ION SECONDARY BATTERIES, AND LITHIUM ION SECONDARY BATTERY**
NEGATIVE ELEKTRODE FÜR LITHIUMIONENSEKUNDÄRBATTERIEN UND LITHIUMIONENSEKUNDÄRBATTERIE
ÉLECTRODE NÉGATIVE POUR BATTERIES SECONDAIRES AU LITHIUM-ION ET BATTERIE SECONDAIRE AU LITHIUM-ION

(30) Priority: 27.09.2019 JP 2019177618
(43) Date of publication of application: 03.08.2022
(73) Proprietor: Panasonic Intellectual Property Management Co., Ltd., Osaka-shi, Osaka 540-6207 (JP)
(72) Inventor: KURODA, Yuta, Osaka-shi, Osaka 540-6207 (JP); YOSHII, Kazuhiro, Osaka-shi, Osaka 540-6207 (JP); OURA, Yuji, Osaka-shi, Osaka 540-6207 (JP)
(74) Representative: Novagraaf International SA
(86) International application number: PCT/JP2020/028214
(87) International publication number: WO 2021/059706

(56) References cited:
- EP-A1- 3 297 073
- WO-A1-2017/111542
- WO-A1-2019/239652
- JP-A- 2011 009 203
- JP-A- 2014 067 638
- JP-A- 2018 055 952
- US-A1- 2019 115 588

## Description

### TECHNICAL FIELD

The present disclosure relates to a negative electrode for a lithium ion secondary battery, and to a lithium ion secondary battery.

### BACKGROUND

Si, a compound containing Si, or the like is an alloying material which alloys with lithium, and it is known that the alloying material can occlude a larger amount of lithium ions per unit volume in comparison to a carbon-based active material such as graphite. For example, Patent Literature 1 discloses a negative electrode for a lithium ion secondary battery having a negative electrode mixture layer which contains a compound containing Si and graphite as a negative electrode active material.

### CITATION LIST

### PATENT LITERATURE

Patent Literature 1: JP 2018-125077 A

### SUMMARY

In a negative electrode including an alloying material, reduction of charge/discharge cycle characteristic is often problematic. This is considered be caused by a large volume change of the alloying material due to charging and discharging, which results in formation of an inter-particle gap for the negative electrode active material, and which consequently results in an increased number of particles of the negative electrode active material isolated from an electrically conductive path in the negative electrode mixture layer.

An advantage of the present disclosure lies in provision of a negative electrode for a lithium ion secondary battery, and a lithium ion secondary battery in which the charge/discharge cycle characteristic of the lithium ion secondary battery can be improved even when an alloying material is used as a negative electrode active material.

According to one aspect of the present disclosure, there is provided a negative electrode for a lithium ion secondary battery, the negative electrode including: a negative electrode electricity collector; and a negative electrode mixture layer formed over the negative electrode electricity collector, wherein the negative electrode mixture layer includes a negative electrode active material including graphite particles A having a particle internal porosity of 10% or lower, graphite particles B having a particle internal porosity of greater than 10%, and an alloying material which alloys with lithium, the negative electrode mixture layer includes a first layer formed over the negative electrode electricity collector, and a second layer formed over the first layer, the graphite particles A and the alloying material are contained in larger amounts in the second layer than in the first layer, the graphite particles B are contained in a larger amount in the first layer than in the second layer, and a content of the alloying material is 15 mass% or lower with respect to a total amount of the negative electrode active material in the negative electrode mixture layer.

According to another aspect of the present disclosure, there is provided a lithium ion secondary battery including the negative electrode for the lithium ion secondary battery.

According to an aspect of the present disclosure, the charge/discharge cycle characteristic of the lithium ion secondary battery can be improved even when the alloying material is used as the negative electrode active material.

### BRIEF DESCRIPTION OF DRAWINGS

FIG. 1 is a cross-sectional diagram showing a lithium ion secondary battery according to an embodiment of the present disclosure.
FIG. 2 is a schematic diagram showing a cross section of a graphite particle.
FIG. 3 is a cross-sectional diagram of a negative electrode according to an embodiment of the present disclosure.

### DESCRIPTION OF EMBODIMENTS

A negative electrode for a lithium ion secondary battery according to an embodiment of the present disclosure comprises a negative electrode electricity collector, and a negative electrode mixture layer formed over the negative electrode electricity collector, wherein the negative electrode mixture layer includes a negative electrode active material including graphite particles A having a particle internal porosity of 10% or lower, graphite particles B having a particle internal porosity of greater than 10%, and an alloying material which alloys with lithium, the negative electrode mixture layer includes a first layer formed over the negative electrode electricity collector, and a second layer formed over the first layer, the graphite particles A and the alloying material are contained in larger amounts in the second layer than in the first layer, the graphite particles B are contained in a larger amount in the first layer than in the second layer, and a content of the alloying material is 15 mass% or lower with respect to a total amount of the negative electrode active material in the negative electrode mixture layer. According to the present disclosure, although the alloying material is used as the negative electrode active material, the charge/discharge cycle characteristic of the lithium ion secondary battery can be improved. A mechanism responsible for the advantage is not sufficiently clear, but, for example, the following may be deduced.

Because the graphite particles A having the particle internal porosity of 10% or lower tend to not deform, the layer including the graphite particles A and the alloying material is a layer having a small inter-particle gap for the negative electrode active material. While the negative electrode including the alloying material expands due to a large volume change of the alloying material due to charging and discharging, the battery casing in which the expanding negative electrode is housed attempts to maintain its shape. Thus, a pressure in a thickness direction is applied to the negative electrode. In consideration of this, by placing larger amounts of the graphite particles A having the particle internal porosity of 10% or lower and the alloying material in the second layer which is at a surface side of the negative electrode than in the first layer, it becomes possible to effectively take advantage of the above-described pressure, so that, even when there is a change in volume of the alloying material due to charging and discharging, the formation of the inter-particle gap in the negative electrode active material can be suppressed. The surface side of the negative electrode described above is a surface opposing a separator or a positive electrode. Further, because graphite particles A having the particle internal porosity of 10% or lower tend to not collapse during the manufacturing of the negative electrode, adhesiveness between the negative electrode electricity collector and the graphite particles A is low. However, because the graphite particles B having the particle internal porosity of greater than 10% tend to collapse during the manufacturing of the negative electrode, adhesiveness between the negative electrode electricity collector and the graphite particles B is high. In addition, because a large change in volume is caused in the alloying material due to the charging and the discharging, adhesiveness between the negative electrode electricity collector and the alloying material tends to be easily reduced. In consideration of these, a configuration for the layer is employed in which the first layer contains lower amounts of the graphite particles A having the particle internal porosity of 10% or lower and the alloying material and a higher amount of the graphite particles B having the particle internal porosity of greater than 10%, so that detachment of the particles of the negative electrode active material from the negative electrode electricity collector can be suppressed. Therefore, with the use of the negative electrode according to the present disclosure, even when the charging and the discharging of the lithium ion secondary battery are repeated, formation of the inter-particle gap for the negative electrode active material and detachment of the negative electrode active material from the negative electrode electricity collector can be suppressed, and the increase in the number of particles of the negative electrode active material which are isolated from the electrically conductive path in the negative electrode mixture layer can be suppressed, and thus, the charge/discharge cycle characteristic of the lithium ion secondary battery can be improved. However, the advantage is only achievable when a content of the alloying material is 15 mass% or lower with respect to a total amount of the negative electrode active material in the negative electrode mixture layer.

A negative electrode for a lithium ion secondary battery, and a lithium ion secondary battery according to an embodiment of the present disclosure will now be described in detail with reference to the drawings. In the present disclosure, a description of "numerical value (1) ~ numerical value (2)" means a value greater than or equal to the numerical value (1) and lower than or equal to the numerical value (2).

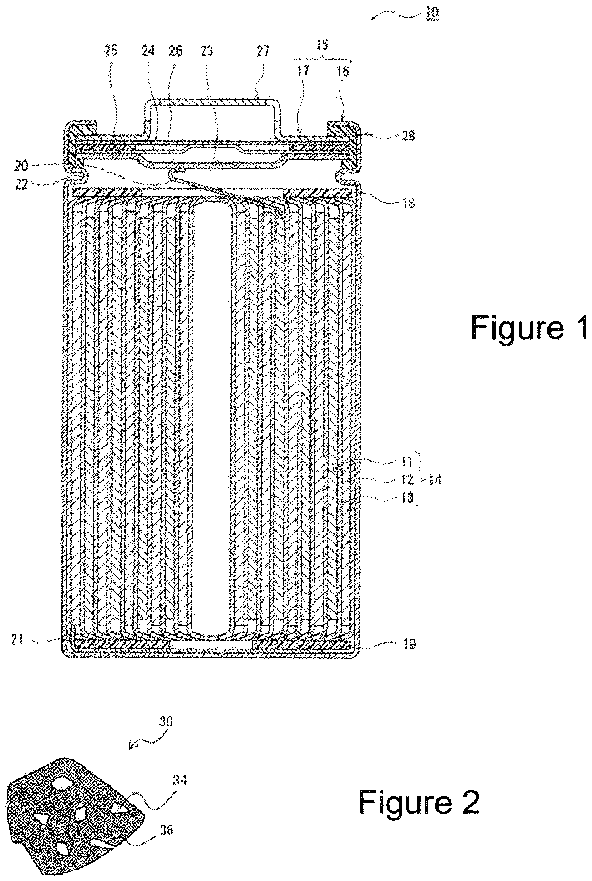

FIG. 1 is a cross-sectional diagram of a lithium ion secondary battery according to an embodiment of the present disclosure. A lithium ion secondary battery 10 shown in FIG. 1 comprises a rolled-type electrode element 14 in which a positive electrode 11 and a negative electrode 12 are rolled with a separator 13 therebetween, an electrolyte, insulating plates 18 and 19 respectively placed above and below the electrode element 14, and a battery casing 15 which houses the above-described members. The battery casing 15 is formed from a casing body 16 having a circular cylindrical shape with a bottom, and a sealing element 17 which blocks an opening of the casing body 16. Alternatively, in place of the rolled-type electrode element 14, an electrode element of other forms may be employed, such as a layered-type electrode element in which the positive electrode and the negative electrode are alternately layered with the separator therebetween. As the battery casing 15, there may be exemplified a metal casing of a shape such as a cylindrical shape, a polygonal shape, a coin shape, a button shape, or the like, and a resin casing (laminated-type battery) formed by laminating resin sheets.

The casing body 16 is, for example, a metal container having a circular cylindrical shape with a bottom. A gasket 28 is provided between the casing body 16 and the sealing element 17, to secure airtightness in the battery. The casing body 16 has, for example, a protrusion 22 in which a part of a side surface portion of the casing body 16 protrudes to an inner side and which supports the sealing element 17. The protrusion 22 is desirably formed in an annular shape along a circumferential direction of the casing body 16, and supports the sealing element 17 with an upper surface thereof.

The sealing element 17 has a structure in which a filter 23, a lower valve element 24, an insulating member 25, an upper valve element 26, and a cap 27 are layered in this order from the side of the electrode element 14. The members of the sealing element 17 have, for example, a circular disk shape or a ring shape, and members other than the insulating member 25 are electrically connected to each other. The lower valve element 24 and the upper valve element 26 are connected to each other at central parts thereof, and the insulating member 25 interposes between peripheral parts of the valve elements. When an internal pressure of the lithium ion secondary battery 10 is increased due to heat generation caused by internal short-circuiting or the like, for example, the lower valve element 24 deforms in such a manner to press the upper valve element 26 toward the side of the cap 27, and ruptures, so that a current path between the lower valve element 24 and the upper valve element 26 is cut off. When the internal pressure further increases, the upper valve element 26 ruptures, and gas is discharged from an opening of the cap 27.

In the lithium ion secondary battery 10 shown in FIG. 1, a positive electrode lead 20 attached to the positive electrode 11 extends through a throughhole of the insulating plate 18 to the side of the sealing element 17, and a negative electrode lead 21 attached to the negative electrode 12 extends through an outer side of the insulating plate 19 to the side of a bottom of the casing body 16. The positive electrode lead 20 is connected by welding or the like to a lower surface of the filter 23 which is a bottom plate of the sealing element 17, and the cap 27 which is a top plate of the sealing element 17 electrically connected to the filter 23 serves as a positive electrode terminal. The negative electrode lead 21 is connected by welding or the like to an inner surface of the bottom of the casing body 16, and the casing body 16 serves as a negative electrode terminal.

The positive electrode 11, the negative electrode 12, the separator 13, and the electrolyte of the lithium ion secondary battery 10 will now be described in detail.

### [Positive Electrode]

The positive electrode 11 comprises a positive electrode electricity collector and a positive electrode mixture layer formed over the positive electrode electricity collector. For the positive electrode electricity collector, there may be employed a foil of a metal which is stable within a potential range of the positive electrode such as aluminum and an aluminum alloy, a film on a surface layer of which the metal is placed, or the like. The positive electrode mixture layer includes, for example, a positive electrode active material, a binder material, and an electrically conductive material. Desirably, the positive electrode mixture layer is formed over both surfaces of the positive electrode electricity collector. The positive electrode can be manufactured, for example, by applying a positive electrode mixture slurry including the positive electrode active material, the binder material, the electrically conductive material, or the like over the positive electrode electricity collector, drying the applied film, and rolling the dried film, to form the positive electrode mixture layer over both surfaces of the positive electrode electricity collector.

The positive electrode active material includes a lithium-containing metal composite oxide as a primary constituent. As metal elements contained in the lithium-containing metal composite oxide, there may be exemplified Ni, Co, Mn, Al, B, Mg, Ti, V, Cr, Fe, Cu, Zn, Ga, Sr, Zr, Nb, In, Sn, Ta, W, Ca, Sb, Pb, Bi, and Ge. A desirable example of the lithium-containing metal composite oxide is a composite oxide containing at least one of Ni, Co, Mn, and Al.

As the electrically conductive material included in the positive electrode mixture layer, there may be exemplified carbon materials such as carbon black, acetylene black, Ketjen black, graphene, carbon nanotube, graphite, or the like. As the binder material included in the positive electrode mixture layer, there may be exemplified a fluororesin such as polytetrafluoroethylene (PTFE), polyvinylidene fluoride (PVDF), or the like, polyacrylonitrile (PAN), polyimide, an acrylic resin, polyolefin, or the like. Alternatively, carboxymethyl cellulose (CMC) or a salt thereof or polyethylene oxide (PEO) or the like may be used along with the above-described resins.

### [Negative Electrode]

The negative electrode 12 comprises a negative electrode electricity collector, and a negative electrode mixture layer formed over the negative electrode electricity collector. For the negative electrode electricity collector, for example, there may be employed a foil of a metal which is stable within a potential range of the negative electrode such as copper and a copper alloy, a film on a surface layer of which the metal is placed.

The negative electrode mixture layer is formed including graphite particles A having a particle internal porosity of 10% or lower, graphite particles B having a particle internal porosity of greater than 10%, and an alloying material which alloys with lithium. The materials will now be descried in detail.

FIG. 2 is a schematic diagram showing a cross section of the graphite particle. As shown in FIG. 2, a graphite particle 30 includes a pore 34 which is closed and is not connected from an inside of the particle to a surface of the particle in a cross-sectional view of the graphite particle 30, and a pore 36 connected from the inside of the particle to the surface of the particle in the cross-sectional view. The pore 34 will hereinafter be referred to as an internal pore 34, and the pore 36 will hereinafter be referred to as an external pore 36. In the present embodiment, the internal porosity of the graphite particle is a two-dimensional value determined from a ratio of an area of the internal pore of the graphite particle with respect to a cross-sectional area of the graphite particle.

It is sufficient that the internal porosity of the graphite particles A is 10% or lower from the viewpoint of improving the charge/discharge cycle characteristic, but the internal porosity is desirably 1% ~ 5%, and is more desirably 3% ~ 5%. It is sufficient that the internal porosity of the graphite particles B is greater than 10% from the viewpoint of suitable collapsing in a compression process during manufacturing of the negative electrode, but the internal porosity is desirably 12% ~ 25%, and is more desirably 12% ~ 23%. The internal porosity of the graphite particles can be determined through the following procedure.

### <Method of Measuring Internal Porosity>

(1) A cross section of the negative electrode active material is exposed. As a method of exposing the cross section, for example, a method may be employed in which a part of the negative electrode is cut, and machined with an ion milling apparatus (for example, IM4000PLUS manufactured by Hitachi High-Tech Corporation), and the cross section of the negative electrode mixture layer is exposed.
(2) Using a scanning electron microscope, a backscattered electron image of the exposed cross section of the negative electrode mixture layer is captured. A magnification when the backscattered electron image is captured is 3000 times to 5000 times.
(3) A cross-sectional image acquired by the above-described process is read into a computer, a binarization process is applied using an image analyzing software (such as, for example, ImageJ manufactured by National Institutes of Health), and a binarized image is acquired in which a particle cross section in the cross-sectional image is converted into black color and pores existing in the particle cross section are converted into white color.
(4) From the binarized image, the area of the graphite particle cross section and the area of the internal pores existing in the graphite particle cross section are calculated. Here, the area of the graphite particle cross section refers to an area of a region surrounded by an outer periphery of the graphite particle, that is, an area of all of the cross-sectional portion of the graphite particle. **In** addition, among the pores existing in the graphite particle cross section, for pores having a width of 3 µm or lower, it may be difficult to judge whether the pore is the internal pore or the external pore in the image analysis, and thus, the pores having the width of 3 µm or lower may be determined as internal pores. Based on the calculated area of the graphite particle cross section and the calculated area of the internal pores of the graphite particle cross section, the internal porosity of the graphite particle is calculated ((internal porosity of the graphite particle) = (area of the internal pores of the graphite particle cross section) * 100/(area of the graphite particle cross section)). An average of internal porosities of 10 graphite particles is taken as the internal porosity of the graphite particles.

The graphite particles A and B are manufactured, for example, in the following manner.

### <Graphite Particles A having Internal Porosity of 10% or lower>

For example, cokes (precursors) which are a primary raw material are ground to a predetermined size, and, in a state in which the cokes are aggregated with a binder material, the aggregate is baked at a temperature of 2600°C or greater for graphitization, and the resulting graphites are then filtered to obtain the graphite particles A of a desired size. Here, the internal porosity may be adjusted to a value of 10% or lower by a particle size of the precursor after the grinding, a particle size of the precursor in the aggregated state, or the like. For example, an average particle size (median size D50) of the precursor after the grinding is desirably in a range of 12 µm ~ 20 µm.

### <Graphite Particles B having Internal Porosity of Greater than 10%>

For example, the cokes (precursors) which are a primary raw material are ground to a predetermined size, the cokes are aggregated with a binder agent, and, in a state in which the aggregate is pressurized and shaped in a block shape, the aggregate is baked at a temperature of 2600°C or grater for graphitization. The block-shape formation after the graphitization is ground and filtered, to obtain the graphite particles B of a desired size. The internal porosity can be adjusted to a value of greater than 10% by an amount of volatile composition added to the block-shape formation.

When a part of the binder material added to the cokes (precursors) vaporizes during the baking, the binder material may be used as the volatile composition. A pitch may be exemplified as such a binder material.

No particular limitation is imposed on the graphite particles A and B used in the present embodiment, such as natural graphite and artificial graphite, but from the viewpoint of ease of adjustment of the internal porosity, the artificial graphite is desirably employed. A plane spacing (d₀₀₂) of a (002) plane determined by an X-ray wide angle diffraction for the graphite particles A and B used in the present embodiment is desirably, for example, 0.3354 nm or greater, is more desirably 0.3357 nm or greater, is desirably lower than 0.340 nm, and is more desirably 0.338 nm or lower. A crystallite size (Lc(002)) determined by the X-ray diffraction for the graphite particles A and B used in the present embodiment is desirably, for example, 5 nm or greater, is more desirably 10 nm or greater, is desirably 300 nm or lower, and is more desirably 200 nm or lower. No particular limitation is imposed on the average particle size for the graphite particles A and B, but the average particle size is, for example, 1 µm ~ 30 µm. The average particle size means a volume-average particle size (Dv50) in which a volume accumulated value becomes 50% in a granularity distribution measured by laser diffraction scattering.

### <Alloying Material>

The alloying material is formed including an element which alloys with lithium, a compound containing an element which becomes a lithium alloy, or both. As elements which alloy with lithium and which can be applied for the negative electrode active material, there may be exemplified Al, Ga, In, Si, Ge, Sn, Pb, As, Sb, Bi, or the like. Of these, Si and Sn are desirable from the viewpoint of increasing the capacity, and Si is particularly desirable.

As compounds containing Si, there may be exemplified compounds containing a silicon oxide phase and Si dispersed in the silicon oxide phase, and compounds containing a lithium silicate phase and Si dispersed in the lithium silicate phase. The compounds containing the silicon oxide phase and Si dispersed in the silicon oxide phase are described as "SiO" in the following description. The compounds containing the lithium silicate phase and Si dispersed in the lithium silicate phase are described as "LSX" in the following description.

On surfaces of the particles of SiO and LSX, an electrically conductive layer formed from a material of a high electrical conductivity may be formed. An example of a desirable electrically conductive layer is a carbon coating formed from a carbon material. The carbon coating is formed from, for example, carbon black, acetylene black, Ketjen black, graphite, or a mixture of two or more of these materials. As a method of carbon-coating the surfaces of the particles of SiO and LSX, there may be exemplified a CVD method using acetylene, methane or the like, or a method in which a coal pitch, a petroleum pitch, a phenol resin, or the like is mixed with the particles of SiO and LSX, and a thermal treatment is applied. Alternatively, the carbon coating may be formed by fixing a carbon powder such as the carbon black on the surface of the particle using a binder material.

A desirable SiO has a sea-island structure in which fine Si particles are approximately uniformly dispersed in an amorphous silicon oxide phase, and is represented by a general formula, SiOₓ (0.5≤x≤1.6). A content of the Si particles is desirably 35 mass% ~ 75 mass% with respect to a total mass of SiO, from the viewpoint of realizing both the battery capacity and the cycle characteristic.

An average particle size of the Si particles dispersed in the silicon oxide phase is typically 500 nm or lower before charging and discharging, is desirably 200 nm or lower, and is more desirably 50 nm or lower. After the charging and discharging, the average particle size is desirably 400 nm or lower, and is more desirably 100 nm or lower. By making the Si particles finer, the volume change during the charging and discharging is reduced, and the cycle characteristic is improved. The average particle size of the Si particles is measured by observing the cross section of SiO using a scanning electron microscope (SEM) or a transmission electron microscope (TEM), and is more specifically determined as an average value of the longest sizes of 100 Si particles. The silicon oxide phase is formed, for example, by a collection of particles finer than the Si particles.

Desirable LSX has a sea-island structure in which fine Si particles are approximately uniformly dispersed in the lithium silicate phase represented by a general formula, Li_{2z}SiO_{(2+z)} (wherein 0<z<2). Similar to the SiO, a content of the Si particles is desirably 35 mass% ~ 75 mass% with respect to a total mass of the LSX. An average particle size of the Si particles is typically 500 nm or lower before charging and discharging, is desirably 200 nm or lower, and is more desirably 50 nm or lower. The lithium silicate phase is formed from, for example, a collection of particles finer than Si particles.

As described above, the lithium silicate phase is desirably formed from a compound represented by Li_{2z}SiO_{(2+z)} (wherein 0<z<2). That is, the lithium silicate phase does not include Li₄SiO₄ (z=2). Li₄SiO₄ is an unstable compound, reacts with water to show an alkaline characteristic, and thus, may alter Si to consequently cause degradation of the charge/discharge capacity. For the lithium silicate phase, desirably, Li₂SiO₃ (z=1) or Li₂Si₂O₅ (z=1/2) is employed as a primary constituent, from the viewpoints of stability, ease of manufacture, electrical conductivity by the lithium ions, or the like.

The SiO may be manufactured by the following process.
(1) Si and silicon oxide are mixed in a weight ratio of, for example, 20:80 ~ 95:5, to manufacture a mixture.
(2) At least before or after the manufacture of the mixture, for example, Si and silicon oxide are ground with a ball mill, to form fine particles.
(3) The ground mixture is thermally treated, for example, at a temperature of 600°C ~ 1000°C, under an inert atmosphere.

In the above-described process, LSX may be manufactured by using lithium silicate in place of the silicon oxide.

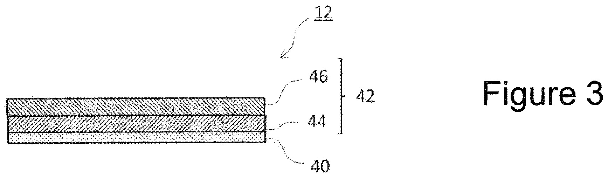

FIG. 3 is a cross-sectional diagram of a negative electrode according to an embodiment of the present disclosure. In the negative electrode 12 shown in FIG. 3, a negative electrode mixture layer 42 formed over a negative electrode electricity collector 40 is formed including a first layer 44 and a second layer 46. The first layer 44 is disposed over the negative electrode electricity collector 40, and the second layer 46 is disposed over the first layer 44. Desirably, the negative electrode mixture layer 42 is formed over both surfaces of the negative electrode electricity collector 40. The second layer 46 being "disposed" "over" the first layer 44 means that the second layer 46 may be disposed directly on the first layer 44, or an intermediate layer may be present between the second layer 46 and the first layer 44.

The first layer 44 includes the graphite particles B as the negative electrode active material. It is sufficient that the graphite particles B are contained in the first layer 44 in a larger amount than in the second layer 46 from the viewpoint of improving the charge/discharge cycle characteristic, but the amount of the graphite particles B in the first layer 44 is desirably in a range of 60 mass% ~ 100 mass% with respect to a total amount of the graphite particles B in the negative electrode mixture layer 42. The first layer 44 may include the graphite particles A and the alloying material as the negative electrode active material, but, from the viewpoint of improving the charge/discharge cycle characteristic, a content of the graphite particles A in the first layer 44 is desirably 40 mass% or lower with respect to a total amount of the graphite particles A in the negative electrode mixture layer 42, and a content of the alloying material in the first layer 44 is desirably 40 mass% or lower with respect to a total amount of the alloying material in the negative electrode mixture layer 42.

The second layer 46 includes the graphite particles A and the alloying material as the negative electrode active material. It is sufficient that the graphite particles A are contained in the second layer 46 in a larger amount than in the first layer 44, from the viewpoint of improving the charge/discharge cycle characteristic, but the amount of the graphite particles A in the second layer 46 is desirably in a range of 60 mass% ~ 100 mass% with respect to the total amount of the graphite particles A in the negative electrode mixture layer 42. In addition, it is sufficient that the alloying material is contained in the second layer 46 in a larger amount than in the first layer 44, from the viewpoint of improving the charge/discharge cycle characteristic, but the amount of the alloying material in the second layer 46 is desirably 60 mass% ~ 100 mass% with respect to the total amount of the alloying material in the negative electrode mixture layer 42. However, when a ratio of the alloying material in the negative electrode mixture layer 42 is increased, the improvement advantage of the charge/discharge cycle characteristic is reduced, and, therefore, it is necessary that the content of the alloying material is 15 mass% or lower with respect to a total amount of the negative electrode active material in the negative electrode mixture layer. A lower limit value of the content of the alloying material is desirably 5 mass% or greater with respect to the total amount of the negative electrode active material in the negative electrode mixture layer 42, from the viewpoint of a higher capacity for the lithium ion secondary battery, and is more desirably 8 mass% or greater.

The second layer 46 may include the graphite particles B as the negative electrode active material, but, from the viewpoint of improving the charge/discharge cycle characteristic, a content of the graphite particles in the second layer 46 is desirably 40 mass% or lower with respect to the total amount of the graphite particles B in the negative electrode mixture layer 42.

The negative electrode active layer 42 desirably includes polyacrylic acid (PAA) or a salt thereof. The PAA salt is, for example, lithium salt, sodium salt, potassium salt, ammonium salt, or the like. When the PAA or the salt thereof is included, the particles of the negative electrode active material are strongly bonded to each other, and the charge/discharge cycle characteristic can thus be improved. The PAA or the salt thereof may be included in the same amount in the first layer 44 and in the second layer 46, or may be included in a larger amount in either of the layers. In order to suppress falling-off of the alloying material from the negative electrode 12, the PAA or the salt thereof is desirably contained in a larger amount in the second layer 46 than in the first layer 44.

The negative electrode mixture layer 42 desirably includes styrene-butadiene rubber. When the styrene-butadiene rubber is included, the particles of the negative electrode active material are strongly bonded to each other, and the charge/discharge cycle characteristic can thus be improved. The styrene-butadiene rubber may be contained in the same amount in the first layer 44 and in the second layer 46, or may be contained in a larger amount in either of the layers. In order to suppress detachment of the negative electrode active material from the negative electrode electricity collector 40, the styrene-butadiene rubber is desirably included in a larger amount in the first layer 44 than in the second layer 46.

The negative electrode mixture layer 42 desirably includes carboxymethyl cellulose (CMC) or a salt thereof. The CMC salt is, for example, lithium salt, sodium salt, potassium salt, ammonium salt, or the like. When the CMC or the salt thereof is included, the particles of the negative electrode active material are strongly bonded to each other, and the charge/discharge cycle characteristic can thus be improved. The CMC or the salt thereof may be included in the same amount in the first layer 44 and in the second layer 46, or in a larger amount in either of the layers. In order to suppress falling-off of the alloying material from the negative electrode 12, the CMC or the salt thereof is desirably contained in a larger amount in the second layer 46 than in the first layer 44.

The negative electrode mixture layer 42 may include a binder material other than the PAA or the salt thereof, the styrene-butadiene rubber, and the CMC or the salt thereof. Examples of such a binder material include a fluororesin such as polytetrafluoroethylene (PTFE), polyvinylidene fluoride (PVDF) or the like, polyacrylonitrile (PAN), polyimide, an acrylic resin, polyolefin, or the like.

A content of the binder material in the negative electrode mixture layer 42 is, for example, desirably 0.5 mass% ~ 10 mass% with respect to the total amount of the negative electrode mixture layer 42, and is more desirably 1 mass% ~ 5 mass%.

The negative electrode mixture layer 42 desirably contains fibrous carbon. By containing the fibrous carbon, a superior electrically conductive path is formed in the negative electrode mixture layer 42, and the charge/discharge cycle characteristic can be improved. The fibrous carbon may be contained in the same amount in the first layer 44 and the second layer 46, or may be contained in a larger amount in either of the layers. However, the fibrous carbon is desirably contained in a larger amount in the second layer 46 than in the first layer 44, from the viewpoint of maintaining the electrically conductive path to the alloying material.

As the fibrous carbon, there may be exemplified carbon nanotube (CNT), carbon nanofiber, or the like. The CNT may be, in addition to a single-layer CNT, a two-layer CNT, a multi-layer CNT, or a mixture of these. The CNT may be a vapor phase grown carbon fiber. The fibrous carbon has, for example, a diameter of 2 nm ~ 20 µm, and an overall length of 0.03 µm ~ 500 µm. A content of the fibrous carbon in the negative electrode mixture layer 42 is, for example, desirably 0.01 mass% ~ 5 mass% with respect to the total amount of the negative electrode mixture layer 42, and is more desirably 0.02 mass% ~ 2 mass%.

A thickness of the negative electrode mixture layer 42 is, for example, 30 µm ~ 100 µm, or 50 µm ~ 80 µm, on one side of the negative electrode electricity collector 40. Thicknesses of the first layer 44 and the second layer 46 may be the same or different from each other.

As described above, an intermediate layer may be provided between the first layer 44 and the second layer 46. The intermediate layer may include the graphite particles A, the graphite particles B, and the alloying material described above, or may include other negative electrode active materials or the like which are known in the prior art. In any case, the intermediate layer may be designed within a range of not adversely affecting the advantage of the present disclosure.

The negative electrode 12 is manufactured, for example, in the following method. A first negative electrode mixture slurry for the first layer 44 including the graphite particles B, and the binder material, or the like, is prepared. A second negative electrode mixture slurry for the second layer 46 including the graphite particles A, the alloying material, and the binder material, or the like, is prepared. The first negative electrode mixture slurry is applied over the negative electrode electricity collector 40, and the applied film is dried, to form the first layer 44 over the negative electrode electricity collector 40. Then the second negative electrode mixture slurry is applied over the first layer 44, the applied film is dried, to form the second layer 46 over the first layer 44, and then, the first layer 44 and the second layer 46 are compressed. In this manner, the negative electrode 12 is obtained in which the negative electrode mixture layer 42 including the first layer 44 and the second layer 46 is formed over the negative electrode electricity collector 40.

### [Separator]

For the separator 13, a porous sheet having an ion permeability and an insulating property is used. Specific examples of the porous sheet include a microporous thin film, a woven fabric, a non-woven fabric, or the like. As the material of the separator 13, desirably, an olefin-based resin such as polyethylene, polypropylene, and a copolymer including at least one of ethylene and propylene, or the like, cellulose, or the like is used. The separator 13 may have a single-layer structure or a layered structure. Over a surface of the separator 13, a heat resistive layer or the like may be formed.

### [Electrolyte]

The electrolyte includes a solvent and an electrolyte salt. The electrolyte is not limited to a liquid electrolyte, and may alternatively be a solid electrolyte which uses a gel-form polymer or the like. For the electrolyte salt, for example, lithium salt such as LiFSI, LiTFSI, LiBF₄, and LiPF₆ is employed. For the solvent, for example, there may be employed esters such as ethylene carbonate (EC), propylene carbonate (PC), dimethyl carbonate (DMC), ethylmethyl carbonate (EMC), diethyl carbonate (DEC), methyl acetate (MA), and methyl propionate (MP), ethers, nitriles, amides, or a mixture solvent of two or more of these. A non-aqueous solvent may contain a halogen substitution product in which at least a part of hydrogen of the solvent is substituted with a halogen atom such as fluorine.

As the halogen substitution product, for example, there may be exemplified fluorinated cyclic ester carbonates such as fluoroethylene carbonate (FEC), fluorinated chain ester carbonates, and fluorinated chain ester carboxylates such as fluoromethyl propionate (FMP).

### EXAMPLES

The present disclosure will now be further described with reference to Examples. The present disclosure, however, is not limited to these Examples.

### <Example 1>

### [Positive Electrode]

98 parts by mass of LiNiCoAlO₂ serving as a positive electrode active material, 1 part by mass of acetylene black serving as an electrically conductive material, and 1 part by mass of polyvinylidene fluoride powder serving as a binder material were mixed, and a suitable amount of N-methyl-2-pyrrolidone (NMP) was added, to prepare a positive electrode mixture slurry. The slurry was applied by a doctor blade method on both surfaces of an electricity collector formed from an aluminum foil (having a thickness of 15 µm), the applied film was dried, and the dried applied film was compressed with a rolling roller, to form a positive electrode in which a positive electrode active material layer was formed over both surfaces of the positive electrode electricity collector.

### [Manufacturing of Graphite Particles A]

Cokes were ground until an average particle size thereof (median size D50) became 15 µm, a pitch was added as a binder material to the ground cokes, and the cokes were aggregated until the average particle size (median size D50) became 17 µm. The aggregate was baked at a temperature of 2800°C for graphitization, and was filtered using a 250-mesh filter, to obtain graphite particles A having an average particle size (median size D50) of 26 µm.

### [Manufacturing of Graphite Particles B]

Cokes were ground until an average particle size (median size D50) became 15 µm, a pitch serving as a binder material was added to the ground cokes, and the cokes were aggregated. Then, an isotopic pressure was applied to form a block-shape formation having a density of 1.6 g/cm³ ~ 1.9 g/cm³. The block-shape formation was baked at a temperature of 2800°C for graphitization, and the block-shape formation was ground and filtered using a 250-mesh filter, to obtain graphite particles B having an average particle size (median size D50) of 23 µm.

### [Manufacturing of Negative Electrode]

94.4 parts by mass of the graphite particles B and 5.6 parts by mass of a Si compound (SiO) were mixed. Using this mixture as a negative electrode active material, the negative electrode active material, CMC, PAA, and styrene-butadiene rubber were mixed in such a manner that a mass ratio of (negative electrode active material):(CMC):(PAA):(styrene-butadiene rubber) was 100:0.9:0.95:1, and a suitable amount of water was added, to prepare a first negative electrode mixture slurry for a first layer. 23 parts by mass of the graphite particles A, 69 parts by mass of the graphite particles B, and 8.4 parts by mass of the Si compound (SiO) were mixed. Using this mixture as a negative electrode active material, the negative electrode active material, the CMC, the PAA, and the styrene-butadiene rubber were mixed in such a manner that a mass ratio of (negative electrode active material):(CMC):(PAA):(styrene-butadiene rubber) was 100:0.9:0.95:1, and a suitable amount of water was added, to prepare a second negative electrode mixture slurry for a second layer.

The first negative electrode mixture slurry was applied over both surfaces of a negative electrode electricity collector formed from a copper foil, and the applied film was dried, to form a first layer over both surfaces of the negative electrode electricity collector. Then, the second negative electrode mixture slurry was applied over the first layer formed over both surfaces of the negative electrode electricity collector, and the applied film was dried, to form a second layer. The applied films were rolled using a roller, to manufacture a negative electrode in which a negative electrode mixture layer including the first layer and the second layer was formed over both surfaces of the negative electrode electricity collector. Internal porosities of the graphite particles A and the graphite particles B in the manufactured negative electrode were measured, and were respectively 1% and 22%. The method of measurement is identical to the method described above, and will not be repeatedly described.

### [Electrolyte Solution]

To a mixture solvent in which ethylene carbonate (EC), fluorinated ethylene carbonate (FEC), and diethyl carbonate (DEC) were mixed with a volume ratio of 27:3:70, 1 mass% of vinylene carbonate (VC) was added, and LiPF₆ was dissolved in a ratio of 1.2 mol/L, to prepare an electrolyte solution.

### [Test Cell]

The positive electrode and the negative electrode were layered in a manner to oppose each other with the separator therebetween, and the resulting structure was rolled to manufacture an electrode element. Then, the electrode element and the electrolyte solution were housed in a battery casing body having a circular cylindrical shape with a bottom, the electrolyte solution was injected, and the opening of the battery casing body was sealed with a gasket and a sealing element, to prepare a test cell.

### <Example 2>

A test cell was manufactured in a manner similar to Example 1 except that, in the preparation of the first negative electrode mixture slurry, the Si compound was not used, and, in the preparation of the second negative electrode mixture slurry, a mixture in which 22 parts by mass of the graphite particles A, 65 parts by mass of the graphite particles B, and 14 parts by mass of the Si compound were mixed was used as the negative electrode active material.

### <Example 3>

A test cell was manufactured in a manner similar to Example 1 except that, in the preparation of the first negative electrode mixture slurry, the Si compound was not used, and, in the preparation of the second negative electrode mixture slurry, a mixture in which 86 parts by mass of the graphite particles A, and 14 parts by mass of the Si compound were mixed was used as the negative electrode active material.

### <Example 4>

A test cell was manufactured in a manner similar to Example 1 except that, in the preparation of the first negative electrode mixture slurry, the Si compound was not used, in the preparation of the second negative electrode mixture slurry, a mixture in which 86 parts by mass of the graphite particles A, and 14 parts by mass of the Si compound were mixed was used as the negative electrode active material, and, in the preparation of the second negative electrode mixture slurry, the negative electrode active material, the CMC, the PAA, the styrene-butadiene rubber, and CNT were mixed in such a manner that a mass ratio of (negative electrode active material):(CMC):(PAA):(styrene-butadiene rubber):(CNT) was 100:0.9:0.95:1:0.5.

### <Comparative Example 1>

A test cell was manufactured in a manner similar to Example 1 except that, in the preparation of the first negative electrode mixture slurry, a mixture in which 93 parts by mass of the graphite particles B, and 7 parts by mass of the Si compound were mixed was used as the negative electrode active material, and, in the preparation of the second negative electrode mixture slurry, a mixture in which 93 parts by mass of the graphite particles B, and 7 parts by mass of the Si compound were mixed was used as the negative electrode active material.

### [Evaluation of Capacity Maintenance Percentage at 50 Cycles]

Under a temperature environment of 25°C, the test cell was charged with a constant current of 0.3C until the battery voltage reached 4.2V, and then charged with a constant voltage of 4.2V until a current value reached 1/50C. Then, a constant-current discharge was performed with a constant current of 1.0C until the battery voltage reached 2.5V. The charging and discharging were performed for 50 cycles, and a capacity maintenance percentage at the charge/discharge cycle was calculated according to the following formula. Capacity maintenance percentage = ((discharge capacity at 50th cycle)/(discharge capacity at 1st cycle)) × 100

Results of evaluation (capacity maintenance percentage at 50 cycles) for the test cells of Examples 1 ~ 4 and Comparative Example 1 are shown in TABLE 1.

**[TABLE 1]**

| | First layer | | | Second layer | | | Test result | Note |
|---|---|---|---|---|---|---|---|---|
| | Graphite particles A (parts by mass) | Graphite particles B (parts by mass) | Si compound (parts by mass) | Graphite particles A (parts by mass) | Graphite particles B (parts by mass) | Si compound (parts by mass) | Charge/discharge cycle capacity maintenance percentage | |
| Example 1 | 0 | 94.4 | 5.6 | 23 | 69 | 8.4 | 94.3% | |
| Example 2 | 0 | 100 | 0 | 22 | 65 | 14 | 96.8% | |
| Example 3 | 0 | 100 | 0 | 86 | 0 | 14 | 97.2% | |
| Example 4 | 0 | 100 | 0 | 86 | 0 | 14 | 98.6% | 0.5 parts of CNT in second layer |
| Comparative Example 1 | 0 | 93 | 7 | 0 | 93 | 7 | 93.5% | |

The test cells of Examples 1 ~ 4 and Comparative Example 1 included 7 mass% of the Si compound in the negative electrode active material. It can be seen that the test cells of Examples 1 ~ 4 had higher values for the capacity maintenance percentage at the charge/discharge cycle than the test cell of Comparative Example 1, and that the charge/discharge cycle characteristic was improved in these test cells.

The test cell of Example 4 differs from the test cell of Example 3 in that CNT was added to the second layer. Based on the evaluation result of the capacity maintenance percentage, it can be seen that the capacity maintenance percentage in Example 4 was improved in a greater degree than the capacity maintenance percentage in Example 3.

### <Example 5>

A test cell was manufactured in a manner similar to Example 1 except that, in the preparation of the first negative electrode mixture slurry, the Si compound was not used, and, in the preparation of the second negative electrode mixture slurry, a mixture in which 20 parts by mass of the graphite particles A, 60 parts by mass of the graphite particles B, and 20 parts by mass of the Si compound were mixed was used as the negative electrode active material.

### <Comparative Example 2>

A test cell was manufactured in a manner similar to Example 1 except that, in the preparation of the first negative electrode mixture slurry, a mixture in which 90 parts by mass of the graphite particles B, and 10 parts by mass of the Si compound were mixed was used as the negative electrode active material, and, in the preparation of the second negative electrode mixture slurry, a mixture in which 22 parts by mass of the graphite particles A, 68 parts by mass of the graphite particles B, and 10 parts by mass of the Si compound were mixed was used as the negative electrode active material.

For the test cells of Example 5 and Comparative Example 2, the capacity maintenance percentage at 50 cycles was evaluated under conditions similar to the above. Results of evaluation (capacity maintenance percentage at 50 cycles) for the test cells of Example 5 and Comparative Example 2 are shown in TABLE 2.

**[TABLE 2]**

| | First layer | | | Second layer | | | Test result |
|---|---|---|---|---|---|---|---|
| | Graphite particles A (parts by mass) | Graphite particles B (parts by mass) | Si compound (parts by mass) | Graphite particles A (parts by mass) | Graphite particles B (parts by mass) | Si compound (parts by mass) | Charge/discharge cycle capacity maintenance percentage |
| Example 5 | 0 | 100 | 0 | 20 | 60 | 20 | 91.2% |
| Comparative Example 2 | 0 | 90 | 10 | 22 | 68 | 10 | 89.7% |

The test cells of Example 5 and Comparative Example 2 included 10 mass% of the Si compound in the negative electrode active material. It can be seen that the test cell of Example 5 had a higher value for the capacity maintenance percentage at the charge/discharge cycle than the test cell of Comparative Example 2, and that the charge/discharge cycle characteristic was improved.

### <Example 6>

A test cell was manufactured in a manner similar to Example 1 except that, in the preparation of the first negative electrode mixture slurry, a mixture in which 88 parts by mass of the graphite particles B, and 12 parts by mass of the Si compound were mixed was used as the negative electrode active material, and, in the preparation of the second negative electrode mixture slurry, a mixture in which 20 parts by mass of the graphite particles A, 62 parts by mass of the graphite particles B, and 18 parts by mass of the Si compound were mixed was used as the negative electrode active material.

### <Comparative Example 3>

A test cell was manufactured in a manner similar to Example 1 except that, in the preparation of the first negative electrode mixture slurry, a mixture in which 85 parts by mass of the graphite particles B, and 15 parts by mass of the Si compound were mixed was used as the negative electrode active material, and, in the preparation of the second negative electrode mixture slurry, a mixture in which 21 parts by mass of the graphite particles A, 64 parts by mass of the graphite particles B, and 15 parts by mass of the Si compound were mixed was used as the negative electrode active material.

For the test cells of Example 6 and Comparative Example 3, the capacity maintenance percentage at 50 cycles was evaluated under conditions similar to the above. Results of evaluation (capacity maintenance percentage at 50 cycles) for the test cells of Example 6 and Comparative Example 3 are shown in TABLE 3.

**[TABLE 3]**

| | First layer | | | Second layer | | | Test result |
|---|---|---|---|---|---|---|---|
| | Graphite particles A (parts by mass) | Graphite particles B (parts by mass) | Si compound (parts by mass) | Graphite particles A (parts by mass) | Graphite particles B (parts by mass) | Si compound (parts by mass) | Charge/discharge cycle capacity maintenance percentage |
| Example 6 | 0 | 88 | 12 | 20 | 62 | 18 | 85.0% |
| Comparative Example 3 | 0 | 85 | 15 | 21 | 64 | 15 | 84.8% |

The test cells of Example 6 and Comparative Example 3 included 15 mass% of the Si compound in the negative electrode active material. It can be seen that the test cell of Example 6 had a higher value for the capacity maintenance percentage at the charge/discharge cycle than the test cell of Comparative Example 3, and that the charge/discharge cycle characteristic was improved.

Based on these results, it can be said that the charge/discharge cycle characteristic of the lithium ion secondary battery is improved by having, when a content of the alloying material is 15 mass% or lower with respect to a total amount of the negative electrode active material, larger amounts of the graphite particles A having a particle internal porosity of 10% or lower and of the alloying material in the second layer than in the first layer, and having a larger amount of the graphite particles B having a particle internal porosity of greater than 10% in the first layer than in the second layer.

### REFERENCE SIGNS LIST

10 LITHIUM ION SECONDARY BATTERY; 11 POSITIVE ELECTRODE; 12 NEGATIVE ELECTRODE; 13 SEPARATOR; 14 ELECTRODE ELEMENT; 15 BATTERY CASING: 16 CASING BODY; 17 SEALING ELEMENT; 18, 19 INSULATING PLATE; 20 POSITIVE ELECTRODE LEAD; 21 NEGATIVE ELECTRODE LEAD; 22 PROTRUSION; 23 FILTER; 24 LOWER VALVE ELEMENT; 25 INSULATING MEMBER; 26 UPPER VALVE ELEMENT; 27 CAP; 28 GASKET; 30 GRAPHITE PARTICLE; 34 INTERNAL PORE; 36 EXTERNAL PORE; 40 NEGATIVE ELECTRODE ELECTRICITY COLLECTOR; 42 NEGATIVE ELECTRODE MIXTURE LAYER; 44 FIRST LAYER; 46 SECOND LAYER.

## Claims

1. A negative electrode (12) for a lithium ion secondary battery (10), the negative electrode (12) comprising:
a negative electrode electricity collector (40); and
a negative electrode mixture layer (42) formed over the negative electrode electricity collector (40), wherein
the negative electrode mixture layer (42) includes a negative electrode active material including graphite particles A having a particle internal porosity of 10% or lower, graphite particles B having a particle internal porosity of greater than 10%, when the particle intemal porosity is measured using scanning electron microscopy as indicated in the description, and an alloying material which alloys with lithium,
the negative electrode mixture layer (42) includes a first layer (44) formed over the negative electrode electricity collector (40), and a second layer (46) formed over the first layer (44),
the graphite particles A and the alloying material are contained in larger amounts in the second layer (46) than in the first layer (44),
the graphite particles B are contained in a larger amount in the first layer (44) than in the second layer(46), and
a content of the alloying material is 15 mass% or lower with respect to a total amount of the negative electrode active material in the negative electrode mixture layer (42).

2. The negative electrode (12) for the lithium ion secondary battery (10) according to claim 1, wherein
the negative electrode mixture layer (42) contains fibrous carbon, and
the fibrous carbon is contained in a larger amount in the second layer (46) than in the first layer (44).

3. The negative electrode (12) for the lithium ion secondary battery (10) according to claim 1 or 2, wherein
the negative electrode mixture layer (42) contains polyacrylic acid or a salt thereof, and
the polyacrylic acid or the salt thereof is contained in a larger amount in the second layer (46) than in the first layer (44).

4. The negative electrode (12) for the lithium ion secondary battery (10) according to any one of claims 1 to 3, wherein
the negative electrode mixture layer (42) contains styrene-butadiene rubber, and
the styrene-butadiene rubber is contained in a larger amount in the first layer (44) than in the second layer (46).

5. The negative electrode (12) for the lithium ion secondary battery (10) according to claim 4, wherein
90 mass% or greater and 100 mass% or lower of the styrene-butadiene rubber contained in the negative electrode mixture layer (42) is contained in a half region on a side near the negative electrode electricity collector (40).

6. The negative electrode (12) for the lithium ion secondary battery (10) according to any one of claims 1 to 5, wherein
the negative electrode mixture layer (42) contains carboxymethyl cellulose or a salt thereof, and
the carboxymethyl cellulose or the salt thereof is contained in a larger amount in the second layer (46) than in the first layer (44).

7. A lithium ion secondary battery (10) comprising:
the negative electrode (12) for the lithium ion secondary battery (10) according to any one of claims 1 to 6.

## Patentansprüche

1. Negativelektrode (12) für eine Lithiumionensekundärbatterie (10), wobei die Negativelektrode (12) umfasst:
einen Negativelektroden-Stromkollektor (40); und
eine Negativelektroden-Gemischschicht (42), die über dem Negativelektroden-Stromkollektor (40) gebildet ist, wobei
die Negativelektroden-Gemischschicht (42) ein Negativelektroden-Aktivmaterial umfasst, das Graphitpartikel **A,** die eine innere Partikelporosität von 10 % oder kleiner aufweisen, Graphitpartikel **B,** die eine innere Partikelporosität von größer als 10 % aufweisen, wenn die innere Partikelporosität unter Verwendung von Rasterelektronenmikroskopie gemessen wird wie in der Beschreibung angegeben, und ein Legierungsmaterial umfasst, das eine Legierung mit Lithium eingeht,
die Negativelektroden-Gemischschicht (42) eine erste Schicht (44), die über dem Negativelektroden-Stromkollektor (40) gebildet ist, und eine zweite Schicht (46) umfasst, die über der ersten Schicht (44) gebildet ist,
die Graphitpartikel A und das Legierungsmaterial in der zweiten Schicht (46) in größeren Mengen enthalten sind als in der ersten Schicht (44),
die Graphitpartikel B in der ersten Schicht (44) in einer größeren Menge enthalten sind als in der zweiten Schicht (46), und
ein Gehalt des Legierungsmaterials, bezogen auf eine Gesamtmenge des Negativelektroden-Aktivmaterials in der Negativelektroden-Gemischschicht (42), 15 Ma.-% oder niedriger ist.

2. Negativelektrode (12) für die Lithiumionensekundärbatterie (10) nach Anspruch 1, wobei
die Negativelektroden-Gemischschicht (42) Kohlenstoffaser enthält, und
die Kohlenstofffaser in der zweiten Schicht (46) in einer größeren Menge enthalten ist als in der ersten Schicht (44).

3. Negativelektrode (12) für die Lithiumionensekundärbatterie (10) nach Anspruch 1 oder 2, wobei
die Negativelektroden-Gemischschicht (42) Polyacrylsäure oder ein Salz davon enthält, und
die Polyacrylsäure oder das Salz davon in der zweiten Schicht (46) in einer größeren Menge enthalten ist als in der ersten Schicht (44).

4. Negativelektrode (12) für die Lithiumionensekundärbatterie (10) nach einem der Ansprüche 1 bis 3, wobei
die Negativelektroden-Gemischschicht (42) Styrol-Butadien-Kautschuk enthält, und
der Styrol-Butadien-Kautschuk in der ersten Schicht (44) in einer größeren Menge vorhanden ist als in der zweiten Schicht (46).

5. Negativelektrode (12) für die Lithiumionensekundärbatterie (10) nach Anspruch 4, wobei
90 Ma.-% oder mehr und 100 Ma.-% oder weniger des Styrol-Butadien-Kautschuks, der in der Negativelektroden-Gemischschicht (42) enthalten ist, in einer Halbregion auf einer Seite nahe des Negativelektroden-Stromkollektors (40) enthalten ist.

6. Negativelektrode (12) für die Lithiumionensekundärbatterie (10) nach einem der Ansprüche 1 bis 5, wobei
die Negativelektroden-Gemischschicht (42) Carboxymethylcellulose oder ein Salz davon enthält, und
die Carboxymethylcellulose oder das Salz davon in der zweiten Schicht (46) in einer größeren Menge enthalten ist als in der ersten Schicht (44).

7. Lithiumionensekundärbatterie (10), umfassend:
die Negativelektrode (12) für die Lithiumionensekundärbatterie (10) nach einem der Ansprüche 1 bis 6.

## Revendications

1. Électrode négative (12) pour une batterie rechargeable au lithium ion (10), l'électrode négative (12) comprenant :
un collecteur d'électricité d'électrode négative (40) ; et
une couche de mélange d'électrode négative (42) formée au-dessus du collecteur d'électricité d'électrode négative (40),
dans laquelle
la couche de mélange d'électrode négative (42) inclut un matériau actif d'électrode négative incluant des particules de graphite A ayant une porosité interne des particules de 10 % ou moins, des particules de graphite B ayant une porosité interne des particules supérieure à 10 %, quand la porosité interne des particules est mesurée par microscopie électronique à balayage comme indiqué dans la description, et un matériau d'alliage qui s'allie au lithium,
la couche de mélange d'électrode négative (42) inclut une première couche (44) formée au-dessus du collecteur d'électricité d'électrode négative (40), et une deuxième couche (46) formée au-dessus de la première couche (44),
les particules de graphite A et le matériau d'alliage sont contenus en de plus grandes quantités dans la deuxième couche (46) que dans la première couche (44),
les particules de graphite B sont contenues en une plus grande quantité dans la première couche (44) que dans la deuxième couche (46), et
la teneur en le matériau d'alliage est de 15 % en masse ou moins par rapport à la quantité totale du matériau actif d'électrode négative dans la couche de mélange d'électrode négative (42).

2. Électrode négative (12) pour une batterie rechargeable au lithium ion (10) selon la revendication 1, dans laquelle
la couche de mélange d'électrode négative (42) contient du carbone fibreux, et
le carbone fibreux est contenu en une plus grande quantité dans la deuxième couche (46) que dans la première couche (44).

3. Électrode négative (12) pour une batterie rechargeable au lithium ion (10) selon la revendication 1 ou 2, dans laquelle
la couche de mélange d'électrode négative (42) contient du poly(acide acrylique) ou un sel de celui-ci, et
le poly(acide acrylique) ou le sel de celui-ci est contenu en une plus grande quantité dans la deuxième couche (46) que dans la première couche (44).

4. Électrode négative (12) pour une batterie rechargeable au lithium ion (10) selon l'une quelconque des revendications 1 à 3, dans laquelle
la couche de mélange d'électrode négative (42) contient du caoutchouc de styrène-butadiène, et
le caoutchouc de styrène-butadiène est contenu en une plus grande quantité dans la première couche (44) que dans la deuxième couche (46).

5. Électrode négative (12) pour une batterie rechargeable au lithium ion (10) selon la revendication 4, dans laquelle
90 % en masse ou plus et 100 % en masse ou moins du caoutchouc de styrène-butadiène contenu dans la couche de mélange d'électrode négative (42) sont contenus dans une demi-région sur un côté proche du collecteur d'électricité d'électrode négative (40).

6. Électrode négative (12) pour une batterie rechargeable au lithium ion (10) selon l'une quelconque des revendications 1 à 5, dans laquelle
la couche de mélange d'électrode négative (42) contient de la carboxyméthylcellulose ou un sel de celle-ci, et
la carboxyméthylcellulose ou le sel de celle-ci est contenu en une plus grande quantité dans la deuxième couche (46) que dans la première couche (44).

7. Batterie rechargeable au lithium ion (10) comprenant :
l'électrode négative (12) pour une batterie rechargeable au lithium ion (10) selon l'une quelconque des revendications 1 à 6.
